# EUROPEAN PATENT SPECIFICATION

(11) **EP 0 530 028 B1**
(45) Date of publication and mention of the grant of the patent: **18.06.1997**
(21) Application number: 92307832.3
(22) Date of filing: 28.08.1992
(51) Int. Cl.: H04N 9/64, H04N 17/02, H04N 9/04

(54) **Video signal processing**
Videosignalverarbeitung
Traitement de signal vidéo

(30) Priority: 29.08.1991 JP 244524/91
(43) Date of publication of application: 03.03.1993
(73) Proprietor: SONY CORPORATION, Tokyo (JP)
(72) Inventor: Matsumoto, Hiroaki, c/o Sony Corporation, Tokyo 141 (JP); Fukuda, Tokuya, c/o Sony Corporation, Tokyo 141 (JP)
(74) Representative: Cotter, Ivan John

(56) References cited:
- US-A- 4 234 890
- US-A- 4 608 593
- SMPTE JOURNAL vol. 99, no. 9, 30 September 1990, SCARSDALE, NY US pages 727 - 733 , XP000108997 S.NISHIKAWA ET AL 'Broadcast-Quality TV Camera with Digital Signal Processor'
- IEEE INTERNATIONAL SOLID STATE CIRCUITS CONFERENCE vol. 34, no. 2, 28 February 1991, NEW YORK, US, pages250 - 251, XP000238327 H. MATSUMOTO ET AL 'A Single-Chip Digital Signal Processor for CCD Cameras'
- NEC RESEARCH AND DEVELOPMENT vol. 32, no. 2, 30 April 1991, TOKYO JP pages 214 - 219 , XP000258455 H.NIKOH ET AL 'New Digital Signal Processor for Video Camera System'
- IEEE JOURNAL OF SOLID-STATE CIRCUITS vol. 26, no. 5, 30 May 1991, NEW YORK US pages 727 - 737 , XP000228230 L.D'LUNA AND KENNETH.H 'A Systems Approach to Custom VLSI for a Digital Color Imaging System'
- IEEE 1989 INTERNATIONAL CONFERENCE ON CONSUMER ELECTRONICS DIGEST OF TECHNICAL PAPERS ICCE, JUNE 6-9, 1989 ROSEMONT, ILLINOIS pages 48 - 49 M.KOBAYASHI ET AL 'The Digital Video Camera LSI System'
- FERNSEH UND KINO TECHNIK. vol. 45, no. 7, 30 July 1991, BERLIN DE pages 358 - 362 , XP000240568 M.POCHERT 'Videokamera mit digitaler Signalverarbeitung'
- NHK TECHNICAL MONOGRAPH no. 35, 30 March 1986, TOKYO JP pages 44 - 55 K. MURAKAMI ET AL 'Computer-Control of Tv Color Camera'
- JEE JOURNAL OF ELECTRONIC ENGINEERING. vol. 20, no. 3, 30 March 1983, TOKYO JP pages 36 - 40 H.MAEDA ET AL 'Color Camera Systems Fully Utilizing Microelectronics Technology'
- ELECTRONIC ENGINEERING vol. 60, no. 744, 30 December 1988, LONDON GB pages 25 - 30 , XP000054358 P.LIGERTWOOD 'A digitally controlled colour TV chip with integrated video filters - PART 2'
- NHK LABORATORIES NOTE no. 254, 30 September 1980, TOKYO, JP pages 1 - 7 K. MURAKAMI ET AL 'Automatic Setup System for High-Sensivity Handy Camera'

## Description

This invention relates to video signal processing.

Video signal processing of video signals generated or used by video equipment, such as a video camera or a video tape recorder, is known. Typical video signal processing operations include gamma correction, contour correction, automatic gain control (AGC), black level adjustment, white balance adjustment, hue adjustment, and colour temperature adjustment.

Previously, when video equipment such as a video camera is initially set up, the various correction and adjustment control parameters (e.g. a gamma correction control signal, an AGC control signal, a black level adjustment signal, etc.) are set before the video equipment is shipped for distribution, use or sale. The adjustment control parameters are determined as functions of different characteristics of the video signal produced by the video equipment (e.g. the video signal produced by a video camera) and are established by an ancillary, add-on device that must be connected to the video equipment. Although the adjustment control parameters are determined externally of the video equipment, the parameters are supplied to the video processing circuits included in the video equipment where the parameters are used to effect proper gamma correction, contour correction, AGC control, and the like.

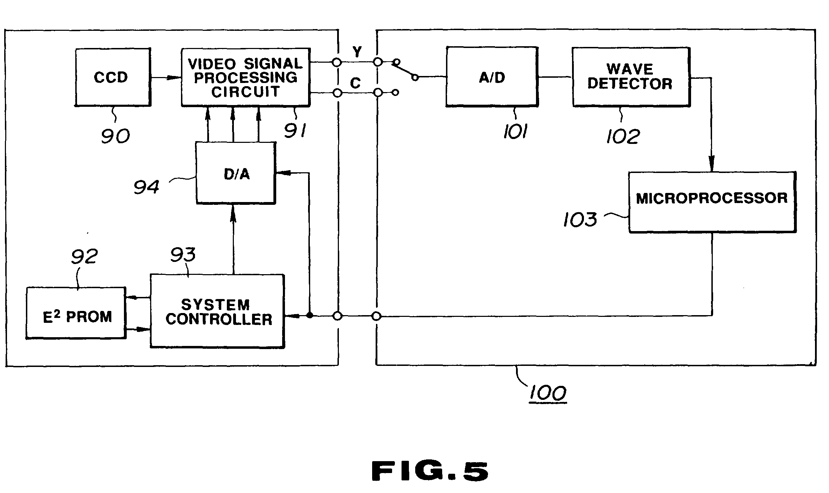

An example of how such a previously proposed ancillary parameter-calculating apparatus is used with video equipment, such as a video camera, is illustrated in Figure 5 of the accompanying drawings. In Figure 5 the video camera is assumed to comprise a charge coupled device (CCD) image sensor 90, although other conventional image pickup devices could be used. The video signal produced by the CCD image sensor 90 is supplied to and processed by a video signal processor 91, which executes gamma correction, contour correction, white balance adjustment, hue adjustment, and various other video control and adjustment operations. As a result, the video signal processor produces a luminance signal Y and a chroma (chrominance) signal C, both properly corrected and adjusted.

The operating levels or parameters for the gamma correction, contour correction, white balance adjustment, hue adjustment, etc. performed by the video signal processor 91 are derived from control data stored in a programmable read only memory 92, such as an electronically erasable programmable read only memory (EEPROM or E²PROM), or other non-volatile memory. The stored control data are read out from the memory by a system controller 93, converted to analogue form by a digital-to-analogue (D/A) converter 94 and supplied to the individual processing circuits included in the video signal processor 91. Thus, depending upon the values of the control data stored in the EEPROM 92, corresponding corrections and adjustments to the video signal produced by the CCD image sensor 90 are made by the video signal processor 91.

To generate appropriate control data to be stored in the EEPROM 92, the luminance and chrominance signals (Y and C) produced by the video camera are analyzed. This analysis is made by an external adjustment apparatus 100 which, as shown in Figure 5, is electrically connected to the video camera. The adjustment apparatus 100 includes a microprocessor 103 that is suitably programmed to calculate the individual control and adjustment parameters for gamma correction, contour correction, white balance adjustment, hue adjustment, etc. The calculation is performed by digitizing the luminance and chrominance signals produced by the video camera and detecting the digitized video signals using a wave detector 102. In this regard, an analogue-to-digital (A/D) converter 101 is selectively coupled by way of a switch to receive and digitize either the luminance signal Y or the chroma signal C. The wave detector 102 is coupled to the A/D converter 101 and detects level information and phase information of the digitized luminance signal Y and the digitized chroma signal C. The detected level and phase information is supplied to the microprocessor 103 and used thereby to calculate the different control parameters needed to effect gamma correction, contour correction, white balance adjustment, hue adjustment, etc. For example, if the detected level and phase information differ from predetermined reference levels, the microprocessor calculates appropriate control parameters which, when supplied to the video signal processor 91, result in corrections and adjustments to the video signal so that the level and phase detected by the wave detector 102 are substantially equal to the predetermined reference levels. The calculated control parameters are supplied in digital form from the microprocessor 103 of the adjustment apparatus 100 to the D/A converter 94 included in the video camera, in which the digital control parameters are converted to analogue form and are used by the video signal processor 91 for gamma correction, contour correction, etc. The closed loop formed by the video signal processor 91, the A/D converter 101, the wave detector 102, the microprocessor 103 and the D/A converter 94 operates such that control parameters are generated by the microprocessor 103, and these control parameters are written into the memory 92 by the system controller 93. Thereafter, the adjustment apparatus 100 may be disconnected from the video camera; but the control parameters stored in the memory 92 nevertheless continue to control the video signal processor 91 to carry out control and adjustment operations on the video signal derived from the CCD image sensor 90.

The previously proposed arrangement shown in Figure 5 does not permit a resetting or readjustment of the control parameters stored in the memory 92 once the adjustment apparatus 100 has been disconnected from the video camera. Thus, modifications or resetting of the control parameters (which may be needed over a period of time) are not attainable without reconnecting the adjustment apparatus 100. The adjustment apparatus is often quite expensive and is constructed as a rather large piece of equipment, thus making it expensive and inconvenient to sell such adjustment apparatus along with the video camera with which it may be used. Also, if the adjustment apparatus is normally supplied only to skilled technicians, it may be difficult, inconvenient and expensive for the user of the video camera to seek the assistance of such technicians for occasional resetting of the control parameters. Thus, the quality of the video signal produced by the video camera may deteriorate over time because adjustments to the control parameters used by the video signal processor are not made.

The problems described above are equally applicable to other video equipment, such as video tape recorders, that include video signal processors which are supplied with control parameters that may require adjustment from time to time.

According to a first aspect, the invention provides video signal processing apparatus for processing a video signal generated by video equipment comprising a video signal source, said apparatus being self-contained with the video equipment and comprising: input means for providing an input video signal to be processed; luminance digital signal processing means arranged to be supplied with luminance adjustment control data for subjecting said input video signal to predetermined luminance adjustment operations to produce adjusted digital luminance signals; chroma digital signal processing means arranged to be supplied with chroma adjustment control data for subjecting said input video signal to predetermined chroma adjustment operations to produce adjusted digital chroma signals; sampling means for selectively sampling at least one of the adjusted digital luminance signal and the adjusted digital chroma signal at preselected times, to generate sampled digital signals; and adjustment control data generating means coupled to said sampling means and responsive to the sampled digital signals for generating at least one of said luminance and chroma adjustment control data and for supplying said adjustment control data to at least one of said luminance and chroma digital signal processing means to subject said input video signal to luminance and chroma adjustment operations, respectively.

According to a second aspect the invention provides video signal processing apparatus for processing a video signal generated by video equipment comprising a video signal source, said apparatus being self-contained with the video equipment and comprising: amplitude adjusting means responsive to amplitude adjustment control data for adjusting the amplitude of an input video signal; DC level adjusting means coupled to said amplitude adjusting means and responsive to level adjustment control data for adjusting the DC level of said input video signal; digital signal processing means coupled to said DC level adjusting means and arranged to be supplied with further adjustment control data, for subjecting the amplitude- and DC level-adjusted input video signal to further luminance adjustment operations to produce an adjusted digital video signal; sampling means for selectively sampling the adjusted digital video signal at preselected times to generate a sampled digital video signal; and adjustment control data generating means coupled to said sampling means and responsive to the sampled digital video signal, for generating said amplitude, level and further adjustment control data and for supplying said amplitude adjustment control data to said amplitude adjustment means, said level adjustment control data to said DC level adjusting means, and said further adjustment control data to said digital signal processing means.

In accordance with the invention, apparatus is provided for generating video signal adjustment data for use by video signal processing circuits of the type that are included in video equipment, such as video cameras, video record/playback devices, and the like. This apparatus is self-contained with the video equipment and includes luminance and chroma digital signal processors supplied with luminance and chroma adjustment control data, respectively, for subjecting an input video signal, such as may be produced by the video camera, to predetermined, respective, luminance and chroma adjustment operations so as to produce adjusted digital luminance and chroma signals. A sampling circuit operable at preselected times samples at least one of the adjusted digital signals, and an adjustment control data generator is responsive to the sampled digital signals for generating luminance and/or chroma adjustment control data that is/are supplied to the luminance and/or chroma digital signal processors.

In a preferred embodiment, the input video signal is supplied to the luminance and chroma digital signal processors by an amplitude adjuster, such as an AGC circuit, whose gain control signal is produced by the adjustment control data generator and is supplied to a register coupled thereto for establishing such amplitude adjustments. In another preferred embodiment, the input video signal is supplied to the luminance and chroma digital signal processors by a DC level adjuster, such as a black level adjuster, whose operation is controlled by level adjustment control data generated by the adjustment control data generator and stored in a register coupled thereto.

Preferably, the chroma digital signal processor includes a white balance adjuster that is supplied with weighting control data produced by the adjustment control data generator as a function of the adjusted digital chroma signal that is sampled.

It is preferred that the chroma digital signal processor includes a hue adjuster that is controlled by hue weighting control data produced by the adjustment control data generator in response to the adjusted digital chroma signal that is sampled.

In at least a preferred embodiment, closed loops are formed by the luminance digital signal processor, the sampler and the adjustment control data generator and by the chroma digital signal processor, the sampler and the adjustment control data generator, whereby the adjustment control data that is produced is fed back to the luminance and chroma digital signal processors and is modified automatically, for example, with each cycle, until the processed digital luminance and chroma signals exhibit optimum characteristics.

In at least the preferred embodiments, the invention provides apparatus for generating video signal adjustment data to correct or adjust video data, which apparatus is self-contained within video equipment (such as a video camera, a record/playback device, or the like); which is easily usable by a user of video equipment so as to produce adjustment control parameters for video signal processing circuits and thereby effect automatic corrections and adjustments in a video signal; which is self-adjustable to produce a video signal exhibiting desired parameters; and which is automatically adjustable to produce gamma correction, contour correction, white balance adjustment, hue adjustment, and the like, of a video signal.

The invention will now be described by way of example with reference to the accompanying drawings, throughout which like parts are referred to by like references, and in which:
Figure 1 is a block diagram of one embodiment of video signal processing apparatus in accordance with the present invention;
Figure 2 is a block diagram of video signal processing apparatus according to another embodiment of the present invention;
Figure 3 is a flow chart representing the manner in which adjustment operations are carried out by a system controller;
Figure 4 is a flow chart representing an exemplary hue adjustment routine; and
Figure 5 is a block diagram of a previously proposed arrangement in which a video camera is connected to an external adjustment parameter generator.

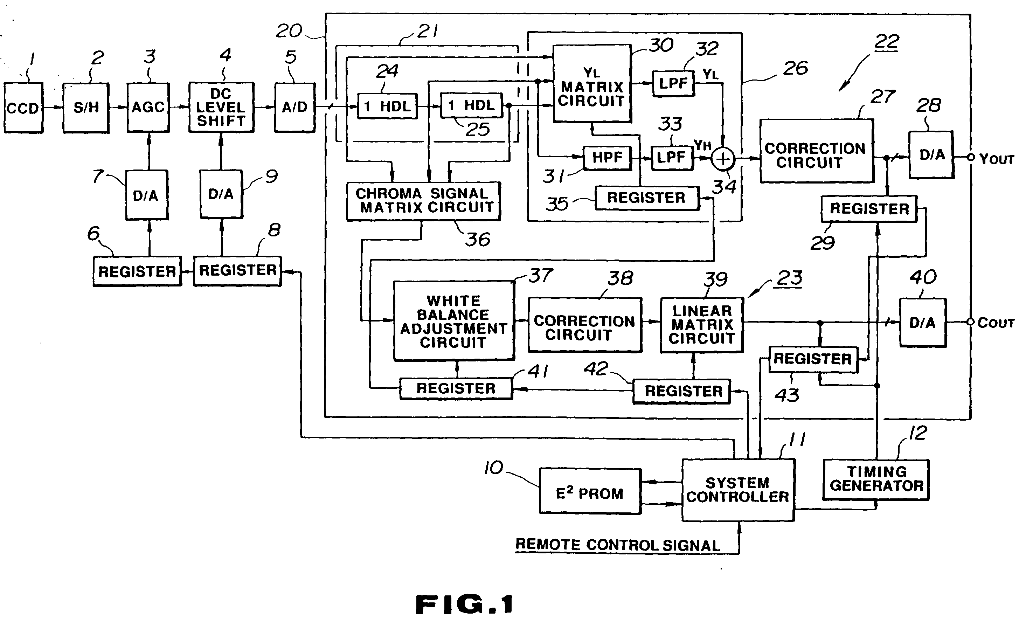

Figure 1 is a block diagram of a video signal processing apparatus according to one embodiment of the present invention. The video signal processing apparatus forms part of a colour video camera, such as a so-called single-plate camera which uses a CCD image sensor 1 as the image pickup device or unit. The CCD image sensor 1 is provided with a supplementary colour coating film and produces an image output signal comprising complementary colour components read out from each of the CCD elements in succession by a sample-and-hold circuit 2. It will be appreciated that the CCD image sensor 1 and the sample-and-hold circuit 2 shown in Figure 1 are conventional, and also that other image pickup devices may be used, from which luminance and chroma output signals Y_{OUT} and C_{OUT} can be derived by a digital signal processor 20 which is supplied with the image signal.

In Figure 1, an input section is coupled to derive an input video signal from the image signal produced by the image pickup device of the video camera. As shown, this input section comprises an automatic gain control (AGC) circuit 3, a DC level shift circuit 4 and an analogue-to-digital (A/D) converter 5. The AGC circuit 3 is operative to control the amplitude of the output luminance signal Y_{OUT} produced by the digital signal processor 20. Accordingly, the AGC circuit 3 serves to amplify the image signal produced by the image pickup device in accordance with a gain control signal supplied to the AGC circuit 3 from a register 6 in which the gain control signal is stored. In the present embodiment, this stored gain control signal is in digital form, and a digital-to-analogue (D/A) converter 7 is coupled to the register 6 to convert the digital gain control signal to analogue form and to supply that analogue gain control signal to the AGC circuit 3. The digital gain control signal is stored in a non-volatile memory 10, such as, but not limited to, an electronically erasable programmable read only memory (EEPROM or E²PROM). The manner in which this gain control signal is produced and stored in the EEPROM will be described below.

The DC level shift circuit 4 is coupled to the AGC circuit 3 and is operative to adjust the DC level of the output luminance signal Y_{OUT} eventually produced by the digital signal processor 20. More particularly, the DC level shift circuit 4 operates to control the black level of the luminance signal to be equal to a predetermined, reference black level. The amount of DC level adjustment to be made to the output luminance signal is determined by a black level control signal that is supplied to the DC level shift circuit 4 from a register 8. This black level control signal is another of the digital adjustment and correction control signals stored in the EEPROM 10. Since the black level control signal stored in the register 8 is in digital form, and since the DC level shift circuit 4 is an analogue circuit (in the embodiment described herein), a D/A converter 9 is coupled to the register 8 to convert the digital signal to analogue form and to supply the analogue black level control signal to the DC level shift circuit 4.

The resulting video signal, whose amplitude and DC level have been adjusted by the AGC circuit 3 and the DC level shift circuit 4, is supplied to the digital signal processor 20 by the A/D converter 5. The A/D converter 5 samples the video signal at a sampling rate sufficient to produce individual pixels, each pixel being represented by a 10-bit digital signal. These digitized pixels are coupled to the digital signal processor 20 which, in the present embodiment, is fabricated on a single integrated circuit (IC) chip.

The digital signal processor 20 comprises a delay circuit 21, a luminance digital signal processor 22 and a chroma digital signal processor 23. The delay circuit 21 comprises two cascaded delay circuits 24 and 25, each operative to impart a delay equal to the time period of one horizontal scan line (or 1H) to the digitized pixels successively supplied thereto by the A/D converter 5. Thus, the delay circuits 24 and 25 are each referred to as 1H delay circuits. The output of the A/D converter 5, the output of the 1H delay circuit 25 and the output of the 1H delay circuit 25 are supplied to the luminance digital signal processor 22 and also to the chroma digital signal processor 23. Thus, each of the luminance and chroma digital signal processors is supplied with digitized pixels exhibiting OH delay, 1H delay and 2H delay.

The luminance digital signal processor 23 comprises a luminance data generator 26 to which the 0H, 1H and 2H delayed pixels are supplied. The luminance data generator 26 comprises a matrix circuit 30 operative to generate luminance data Y_{L} representing luminance information in a relatively low frequency band, a low pass filter (LPF) 32 coupled to the output of the matrix circuit 30, a high pass filter (HPF) 31 coupled to receive the 1H delayed pixel data from the delay circuit 21, a low pass filter 33 coupled to the high pass filter 31, and an adder 34 coupled to the outputs of the low pass filters 32 and 33. The matrix circuit 30 is supplied with the 0H, 1H and 2H delayed pixels from the delay circuit 21, from which the low frequency band luminance data Y_{L} is produced. This luminance data Y_{L} is supplied to the adder 34 by the low pass filter 32. It will be appreciated that the matrix circuit combines the 0H, 1H and 2H delayed pixels in a particular ratio so as to produce the low frequency band luminance data Y_{L}. This combining ratio is determined by combining ratio control data stored in a register 35 and supplied therefrom to the matrix circuit 30. The combining ratio may be adjusted to provide corrections for colour temperature, and the combining ratio control data stored in the register 35 may be thought of as colour temperature control data. Thus, as this colour temperature control data is adjusted (as will be described below), the combining ratio of the 0H, 1H and 2H delayed pixels is correspondingly adjusted to correct the low frequency band luminance data Y_{L} for variations in colour temperature.

The high pass filter 31 is coupled to the output of the 1H delay circuit 24 to extract data Y_{H} in a relatively high frequency band. The low pass filter 33 minimizes higher frequency noise and supplies the extracted high frequency band luminance data Y_{H} to the adder 34, in which it is combined with the low frequency band luminance data Y_{L}. The resulting luminance data produced by the adder 34 is coupled to a gamma correction circuit 27, from which gamma-corrected luminance data is converted to analogue form by a D/A converter 28 and supplied as an output luminance signal Y_{OUT} to further apparatus (not shown). The output of the gamma correction circuit 27 is also coupled to a register 29, which is supplied with timing signals by a timing generator 12 so as to sample the luminance data processed by the luminance digital signal processor 22 at preselected times. Depending upon the sampling times, different characteristics and parameters of the processed luminance data are sampled, such as the black level, the white level, etc. The timing generator 12 is controlled by a system controller 11, as will be described below.

The chroma digital signal processor 23 comprises a chroma signal matrix circuit 36 coupled to the delay circuit 21 to combine the 0H, 1H and 2H delayed pixels to produce chroma data. The chroma signal matrix circuit 36 is conventional and further description thereof is not provided herein. The output of the chroma signal matrix circuit 36 is coupled to a white balance adjustment circuit 37 which operates to adjust the individual chroma components supplied thereto by the matrix circuit 36 by multiplying the components by white balance weighting coefficients stored in a register 41. The white balance weighting coefficients are adjustable, as will be described below, and are supplied to the register 41 from the memory 10, in which the white balance weighting control data are stored along with other adjustment and correction control data.

The white balance adjusted chroma data produced by the white balance adjustment circuit 37 are supplied to a gamma correction circuit 38, which may be conventional, and the resulting gamma corrected chroma data are coupled to a linear matrix circuit 39 for hue adjustment. The linear matrix circuit 39 is operative to adjust the chroma components supplied thereto by multiplying the components by hue adjustment weighting coefficients supplied to the linear matrix circuit 39 from a register 42. The hue adjustment weighting coefficients are referred to as hue adjustment control data, and this control data is supplied to the register 42 from the memory 10.

The chroma data output by the linear matrix circuit 39 has been white balance adjusted, gamma corrected and hue adjusted, and this chroma data is sampled at preselected times by a sampling register 43. The sampling register 43 is supplied with suitable timing pulses by the timing generator 12 under the control of the system controller 11. The timing pulses determine the sampling times of the digitally processed chroma data, so that particular characteristics and parameters of the chroma information, such as white balance, hue, etc are sampled.

The digitally processed chroma data produced by the linear matrix circuit 39 are converted to analogue form by a D/A converter 40, which supplies a chroma output signal C_{OUT} for use by other apparatus (not shown).

The memory 10, which may be an EEPROM, as mentioned above, is bidirectionally coupled to the system controller 11 which writes correction and adjustment control data (referred to hereafter for simplicity as adjustment control data) into the memory 10, and reads the adjustment control data to the registers 6, 8, 35, 41 and 42. The system controller preferably comprises a suitably programmed microprocessor which generates the adjustment control data in response to the sampled luminance and chroma data obtained by the registers 29 and 43, respectively. Changes in the adjustment control data generated by the system controller 11 are made until the samples of luminance and chroma data are substantially equal to predetermined or desired values.

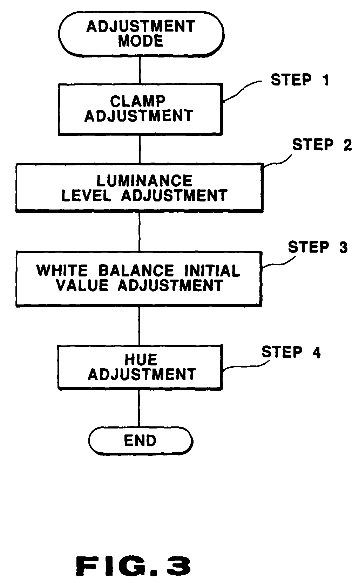

The manner in which the apparatus illustrated in Figure 1 generates and utilizes the video signal adjustment control data will now be described. The image pickup device 1 is pointed to a colour bar test chart to image the usual colour information included thereon. Thus, the input video signal supplied to the digital signal processor 20 represents the colour bar test chart, and the luminance and chrominance output signals Y_{OUT} and C_{OUT} produced by the digital signal processor 20 are derived from the image information on the chart. Samples of the digital luminance output signal produced by the luminance digital signal processor 22 are obtained by the register 29 at preselected times, and the system controller 11 generates black level control data, gain control data and colour temperature control data as a function of such luminance samples. Thereafter, samples of the digitized chroma data produced by the chroma digital signal processor 23 are obtained by the register 43 at discrete, preselected times, and the system controller 11 generates white balance control data and hue adjustment data as a function of these chroma samples. One illustrative sequence in which adjustments to the luminance data and adjustments to the chroma data are made is represented by a flow chart shown in Figure 3.

Preferably, although not necessarily, clamp adjustment processing is performed, as represented by a step 1 in the flow chart of Figure 3. In the clamp adjustment processing, the black level of the luminance data provided at the output of the luminance digital signal processor 22 is sampled (or fetched) and stored in the register 29, by supplying to the register 29 timing signals that coincide with the occurrence of black level in the video signal imaged by the image pickup device 1. The resulting black level sample is supplied from the register 29 to the system controller 11, in which the difference between the sampled black level and a reference black level is calculated. The system controller 11 generates black level control data of a magnitude which, when supplied to the DC level shift circuit 4, results in a black level adjustment such that the calculated difference is reduced towards zero. The generated black level control data is actually supplied to the DC level shift circuit 4 via the register 8, and is used to control the DC level shift imparted to the video signal by the DC level shift circuit 4. At a subsequent black level sampling time, it would be expected that the black level sample obtained by the register 29 will be substantially equal to the aforementioned reference black level. However, if this is not the case, the system controller 11 generates, and supplies to the register 8, new black level control data. This cyclical operation is repeated until the luminance data produced by the luminance digital signal processor 22 exhibits a black level that is substantially equal to the reference black level. At that time, the black level control data that is supplied to the register 8 by the system controller 11 is also stored in the memory 10.

After the clamp adjustment operation represented by the step 1 has been performed, a luminance level adjustment operation is carried out, as represented by a step 2 in the flow chart of Figure 3. The register 29 is supplied with timing signals from the timing generator 12 which coincide with the occurrence of the scanning of a white portion of the colour bar test chart. Accordingly, the white level of the digital luminance data produced by the luminance digital signal processor 22 is sampled (or fetched) by the register 29 and is supplied to the system controller 11. The system controller 11 calculates the difference between this sampled white level and a reference white level, and generates gain control data as a function of the calculated difference. The gain control data is supplied from the system controller 11 to the register 6 and is used by the AGC circuit 3 to set the gain (or amplitude) of the input video signal supplied to the digital signal processor 20. The register 29 is operated once again to sample the white level of the digital luminance signal provided at the output of the luminance digital signal processor, and the difference, if any, between this sampled white level and the reference white level is again calculated by the system controller 11 to modify the gain control data stored in the register 6. This cyclical operation is repeated until the sampled white level is substantially equal to the reference white level. At that time, the gain control data supplied to the register 6 by the system controller 11 is also stored in the memory 10.

After generating the desired gain control data, the system controller 11 performs a further operation in accordance with the luminance level adjustment routine represented by the step 2 in Figure 3. In this further operation, the register 29 is operated by timing signals which coincide with scanned red and blue portions of the colour bar test chart, so that the register 29 samples (or fetches) the digital luminance data that is produced in response to the red and blue portions. These samples, obtained by the register 29, represent colour temperatures, and are supplied to the system controller 11, which calculates the difference between the sampled colour temperature levels and corresponding reference colour temperature levels. Colour temperature adjustment data are generated as a function of the calculated difference and are supplied by the system controller to the register 35, so that the colour temperature adjustment data are used by the matrix circuit 30 to provide colour temperature correction by adjusting the combining ratio in which the 0H, 1H and 2H delayed pixels are combined. Then, the digital luminance signal produced at the output of the luminance digital signal processor 22 is sampled once again to obtain further colour temperature samples which, in turn, are compared to the reference colour temperature levels by the system controller 11. This cyclical operation is repeated until the colour temperature adjustment data supplied to the register 35 results in colour temperatures that are substantially equal to the reference colour temperatures. At that time, the colour temperature adjustment data that is supplied by the system controller 11 to the register 35 is also stored in the memory 10.

After carrying out the luminance level adjustment operations described above with reference to the step 2, the system controller 11 advances to perform a white balance initial value adjustment routine, as represented by a step 3 in the flow chart of Figure 3. In the white balance initial valve adjustment routine, the level of the digital chroma signal produced at the output of the chroma digital signal processor 23 is sampled (or fetched) at the time that the white portion of the colour bar test chart is scanned. This sampling is performed by supplying the register 43 with timing signals that coincide with the scanning of the white portion. The sampled digital chroma signal obtained by the register 43 is supplied to the system controller 11 which determines whether a white balance adjustment is needed. For example, if the sampled digital chroma signal differs from a predetermined value, the system controller 11 generates white balance weighting data which is supplied to the register 41 and used by the white balance adjustment circuit 37 to vary the weighting coefficients with which the chroma signals produced by the chroma signal matrix circuit 36 are multiplied. Then, the digital chroma signal produced at the output of the chroma digital signal processor is sampled once again, and this cyclical operation is repeated until the white balance adjustment data stored in the register 41 results in chroma samples of a desired value. When this condition is fulfilled, a correct white balance has been achieved, and the white balance adjustment data that had been supplied to the register 41 by the system controller 11 is also stored in the memory 10.

After the white balance adjustment operation has been carried out as described above, the system controller 11 advances to a step 4 of the flow chart shown in Figure 3 to carry out a hue adjustment operation. The register 43 is now supplied with timing signals which coincide with the scanning of particular portions of the colour bar test chart, thereby sampling (or fetching) colour difference data from the digital chroma data produced at the output of the chroma digital signal processor 23. The colour difference data samples are supplied from the register 43 to the system controller 11, which generates hue adjustment weighting data as a function of such colour difference samples. For example, if the colour difference samples differ from corresponding reference samples, the system controller 11 generates hue adjustment data which varies the weighting coefficients with which the chroma data are multiplied in the linear matrix circuit 39. The colour difference data produced at the output of the chroma digital signal processor 23 are then sampled once again, and the foregoing cyclical operation is repeated until the hue adjustment data supplied to the register 42 by the system controller 11 results in digital chroma data of a predetermined hue. At that time, the hue adjustment data is also stored in the memory 10.

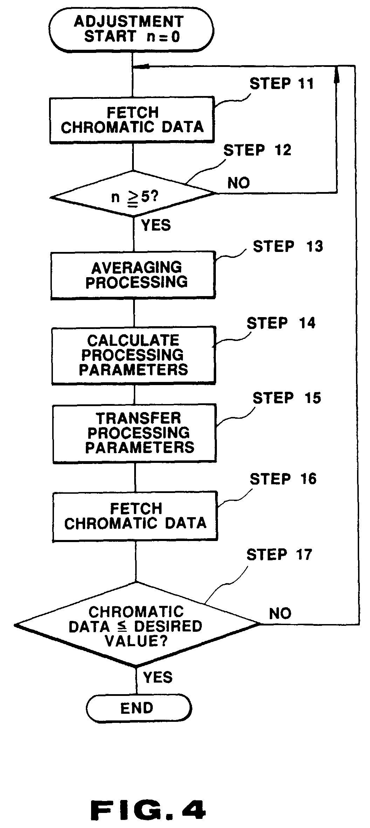

A more detailed description of the hue adjustment routine executed by the system controller 11 will now be provided with reference to the flow chart shown in Figure 4. At the beginning of this routine, a cyclical count n, representing the number of colour difference data samples that are obtained by the register 43, is reset to 0. Then, at a step 11, a timing signal is supplied to the register 43 to sample (or fetch) the colour difference data included in the digital chroma signal produced at the output of chroma digital signal processor 23. This sample obtained by the register 43 is supplied to the system controller 11 and the cyclical count n is incremented by 1. A test is then performed at a step 12, to determine if the cyclical count n is equal to or greater than 5. If not, that is if five samples of the colour difference data have not yet been obtained, the steps 11 and 12 are repeated until five samples have been supplied from the register 43 to the system controller 11. Once five samples have been obtained by the register 43 (i.e. n=5), the test of step 12 is answered in the affirmative and the routine advances to a step 13.

At the step 13, the five colour difference data samples are averaged and, based upon the average value of the colour difference data, the hue adjustment control data is generated at a step 14. The calculated hue adjustment control data is transferred from the system controller 11 to the register 42 at a step 15. The linear matrix circuit 39 is controlled by the hue adjustment control data to multiply the chroma data supplied thereto from the gamma correction circuit 38 by weighting coefficients which are determined by the hue adjustment control data. Hence, the linear matrix circuit 39 performs a hue adjustment operation on the chroma data.

The hue-adjusted chroma data produced at the output of the linear matrix circuit 39 is then sampled once again by the register 43, at a step 16, in response to timing signals generated by the timing generator 12. The sampled, hue-adjusted colour difference data fetched by the register 43 is supplied to the system controller 11 which then tests at a step 17, whether the sampled colour difference data is equal to or less than a desired (or reference) value. If this test is answered in the affirmative, the hue adjustment operation is complete and the hue adjustment control data that had been transferred to the register 42 and that had resulted in the desired hue adjustment is stored in the memory 10. However, if the sampled colour difference data is greater than its desired value, the inquiry of the step 17 is answered in the negative and the system controller 11 repeats the hue adjustment routine of Figure 4.

Thus, in accordance with this embodiment of the invention, video equipment, such as a colour video camera, is provided with a self-contained, automatic adjustment arrangement to produce adjustment control data that is used by the video signal processing circuitry of the video equipment to effect a proper initial set-up condition. As described above, when the video camera images a colour bar test chart, appropriate gain control data, black level control data, colour temperature adjustment data, white balance control data and hue adjustment control data are generated by the system controller 11 in response to the digital luminance and chroma data derived from the imaged colour bar test chart. The control data is supplied to the AGC register 6, the DC level shift register 8, the luminance matrix circuit register 35, the white balance adjustment register 41 and the chroma matrix circuit 42 to effect control over the AGC circuit 3, the DC level shift circuit 4, the luminance matrix circuit 30, the white balance adjustment circuit 37 and the chroma matrix circuit 39, respectively. The registers 29 and 43 are triggered, or enabled, by timing pulses supplied thereto from the timing generator 12 so as to sample the digital luminance and chroma data at times corresponding to the scanning of particular portions of the colour bar test chart. Thus, adjustment control data is obtained in the present embodiment without requiring the connection of external adjustment apparatus (such as that shown in Figure 5) to the video camera, thereby facilitating modifications in the set-up condition of the video equipment, which may be needed by the user over time. Hence, adjustments to the set-up condition that may be needed over time, and which previously have required the skill of a suitably trained technician (which in turn is expensive and time-consuming for the user of the video equipment) can be avoided.

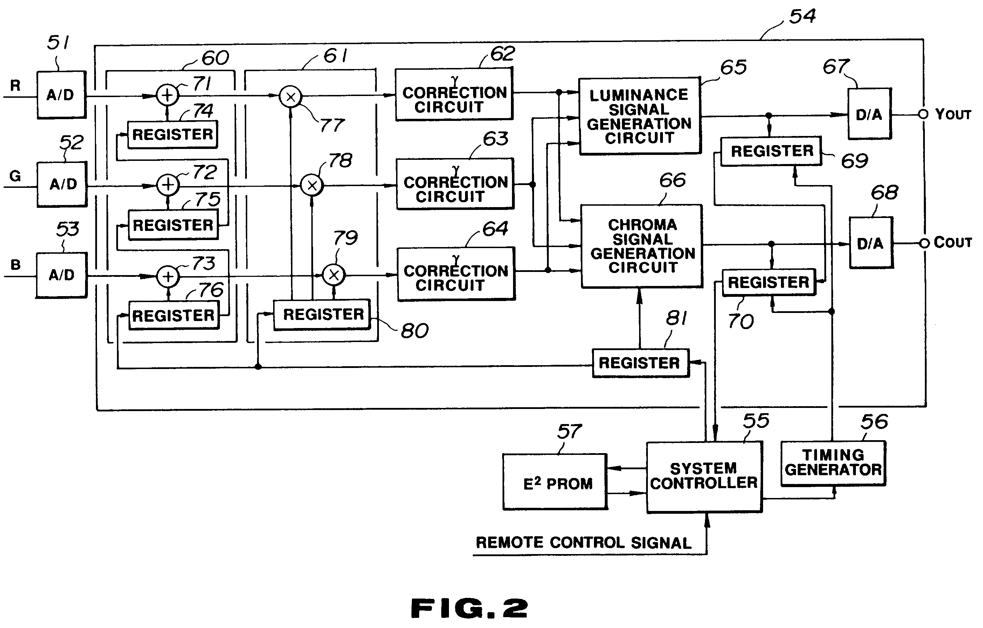

Another embodiment of the invention will now be described with reference to the block diagram shown in Figure 2. In this embodiment, a digital signal processor 54 is used with an image pickup device of the type which is commonly referred to as a three-plate pickup unit and which generates the usual three primary colour components: red, green and blue (RGB). The digital signal processor 54 includes a clamp circuit 60, operative to clamp each of the digital colour components to a reference black level, a white balance adjustment circuit 61, a luminance signal generator 65 and a chroma signal generator 66. The clamp circuit 60 includes red, green and blue clamp sections of substantially identical structure. The red clamp section comprises an adder 71 and a register 74, the latter storing clamp level data which is summed with a digitized red colour component supplied from an A/D converter 51. As the clamp level data stored in the register 74 varies, the black level to which the digital red colour component is clamped likewise varies.

Similarly, the green clamp section included in the clamp circuit 60 comprises an adder 72 coupled to a register 75, the latter storing clamp level data that is summed with a digitized green colour component supplied to the adder 72 by an A/D converter 52. Finally, the blue clamp section comprises an adder 73 coupled to a register 76, the latter storing clamp level data which is summed with a digitized blue colour component supplied to the adder 73 by an A/D converter 53. It will be appreciated that, depending upon the black levels to which the digital red, green and blue colour components are clamped, a luminance signal derived from these colour components exhibits a corresponding black level.

The clamp level data are supplied to the registers 74, 75 and 76 are produced by a system controller 55 and stored in and retrieved from a memory 57, such as an EEPROM. The system controller 55 and the EEPROM 57 may be similar to the system controller 11 and EEPROM 10 of the embodiment shown in Figure 1.

The white balance adjustment circuit 61 is coupled to the clamp circuit 60 and includes three multipliers 77, 78 and 79 coupled to the adders 71, 72 and 73, respectively, for multiplying the digital R, G and B components by respective white balance weighting coefficients supplied to the multipliers by a register 80. The register 80 is coupled to the system controller 55 to receive therefrom white balance control data which establishes the weighting coefficients by which the R, G and B components are multiplied. As these weighting coefficients vary, the white balance of the chroma data produced by the digital signal processor 54 likewise changes.

The white balance adjustment circuit 61 is coupled to the luminance signal generator 65 and also to the chroma signal generator 66 by three gamma correction circuits 62, 63 and 64. Each of these gamma correction circuits provides gamma correction for a respective one of the white balance adjusted colour components R, G and B. Thus, the gamma correction circuit 62 couples the output of the multiplier 77 to the luminance signal generator 65 and to the chroma signal generator 66. Similarly, the gamma correction circuit 63 couples the output of the multiplier 78 to the luminance and chroma signal generators 65 and 66. Finally, the gamma correction circuit 64 couples the output of the multiplier 79 to the luminance and chroma signal generators. In this manner, white balance adjusted and gamma-corrected R, G and B colour components are supplied both to the luminance signal generator 65 and to the chroma signal generator 66.

The luminance signal generator 65 is operative to combine the R, G and B colour components supplied thereto in a predetermined ratio to produce luminance data Y. This luminance data is converted from its digital form to an analogue luminance output signal Y_{OUT} by a D/A converter 67. A register 69, which may be similar to the register 29 of Figure 1, is coupled to the output of the luminance signal generator 65 to sample (or fetch) the luminance data at preselected times in response to timing signals supplied thereto by a timing generator 56. This timing generator is coupled to and controlled by the system controller 55. The timing signals produced by the timing generator 56 coincide with the scanning of particular portions of a colour bar test chart that is imaged by the video camera during a setup adjustment operation.

The chroma signal generator 66 combines the R, G and B colour components supplied thereto in a predetermined ratio determined by hue adjustment data coupled from a register 81. This hue adjustment data is generated by the system controller 55 and stored in the memory 57 from which it is retrieved to initiate a set-up operation. It will be appreciated that such hue adjustment data may be weighting coefficients by which the R, G and B colour components are multiplied. As these weighting coefficients are varied, the hue of the chroma data produced at the output of chroma signal generator 66 likewise varies.

The digital chroma data produced at the output of the chroma signal generator 66 is converted to analogue form by a D/A converter 68 to produce a chroma output signal C_{OUT}. The digital chroma data produced at the output of the chroma signal generator 66 is also sampled (or fetched) by a register 70 under the control of timing signals produced by the timing generator 56. The sampling operation supplies the system controller 55 with the chroma data produced at preselected times which correspond to portions of the colour bar test chart then being scanned by the video camera.

In operation, when the video camera, which includes the digital signal processor shown in Figure 2, images a colour bar test chart, the timing generator 56 is controlled by the system controller 55 to generate timing pulses to carry out different setup operations to establish the proper initial setup conditions for the processing circuitry included in the digital signal processor. The register 69 samples the luminance data produced by the luminance signal generator 65 representing the black level of the video signal produced by the camera. The system controller 55 compares this sampled black level with a desired, reference black level and calculates appropriate clamp level data to make the sampled black level substantially equal to the desired black level. This clamp level data is supplied to the registers 74, 75 and 76 to adjust the black clamp level of the R, G and B colour components, thus adjusting the black level of the luminance data produced by the luminance signal generator 65. This operation is repeated by the system controller until the actual black level of the luminance data is substantially equal to the desired black level. At that time, the clamp level data which results in the proper black level is stored in the memory 57.

The timing generator 56 also supplies timing signals to the register 70 to sample (or fetch) the digital chroma data produced by the chroma signal generator 66 at preselected times corresponding to the scanning of a white portion of the colour bar test chart. The sampled chroma data produced by the chroma signal generator 66 is supplied to the system controller 55 which calculates appropriate white balance weighting coefficients from the sampled chroma data and supplies the calculated white balance weighting coefficients to the register 80. These weighting coefficients are multiplied by the R, G and B colour components, and the above operation is repeated cyclically until the white balance weighting coefficients result in chroma data samples having a desired (proper) white balance level. At that time, the system controller 55 writes the weighting coefficients (i.e. the white balance control data) into the memory 57.

The timing signals supplied to the register 70 are also used to sample (or fetch) the chroma data produced by the chroma signal generator 66 at preselected times suitable for sensing the hue of the chroma data. The system controller 55 generates hue adjustment data which controls the ratio by which the R, G and B components are combined by the chroma signal generator 66 so that chroma data of a desired hue is generated. The calculated hue adjustment data is coupled from the system controller to the register 81, resulting in a hue adjustment of the chroma data, and the above operation is repeated cyclically until the hue of the chroma data samples is substantially equal to a desired hue. At that time, the hue adjustment data produced by the system controller 55 is written into the memory 57.

From the above description, it will be seen that the memory 57 stores initial adjustment data for establishing the correct black level, white balance and hue of the video signal produced by the video camera. Since the memory 57 is a non-volatile memory, the data remains stored therein even when the camera is not in use, such as when it is turned off. Hence, when a user next wishes to operate the video camera, the adjustment data is read from the memory 57 and supplied to the registers 76, 80 and 81 to establish the desired set-up condition of the camera. Moreover, when the initial set-up condition has to be varied (for example when the operating characteristics of the digital signal processor vary over time), the adjustment data stored in the memory 57 may be modified by using the video camera to image a colour bar test chart in the manner described above. Therefore, the embodiments shown in Figure 1 and Figure 2 both permit a user of video equipment (e.g. a video camera) to establish and correct the set-up conditions for digital video signal processing circuitry without requiring the video equipment to be attached to external adjustment apparatus of the type shown in Figure 5. In this way, gain control, black level control, colour temperature control, white balance control, hue control, etc. may be effected by the user without returning the video equipment for factory adjustment and without seeking the particular expertise and skill of a highly trained technician.

While the invention has been particularly shown and described with reference to the preferred embodiments, it will be readily appreciated by those of ordinary skill in the art that various changes and modifications may be made without departing from the scope of the invention. For example, the system controller 11 or the system controller 55 may operate in an automatic, sequential mode to adjust the various operating parameters of the video signal processing circuitry or, alternatively, individual adjustments to desired operating parameters may be made by selecting the parameter to be adjusted (e.g. by keyboard selection). Also, although the memory 10 and the memory 57 have been described as being EEPROMs, other non-volatile memory devices may be used in which the stored data may be modified when required. Thus, other types of programmable read only memories may be substituted for the EEPROMs described herein.

## Claims

1. Video signal processing apparatus for processing a video signal generated by video equipment comprising a video signal source (1, 2), said apparatus being self-contained with the video equipment and comprising:
input means (3, 4, 5) for providing an input video signal to be processed;
luminance digital signal processing means (22) arranged to be supplied with luminance adjustment control data for subjecting said input video signal to predetermined luminance adjustment operations to produce adjusted digital luminance signals (Y_{OUT});
chroma digital signal processing means (23) arranged to be supplied with chroma adjustment control data for subjecting said input video signal to predetermined chroma adjustment operations to produce adjusted digital chroma signals (C_{OUT});
sampling means (29, 43) for selectively sampling at least one of the adjusted digital luminance signal (Y_{OUT}) and the adjusted digital chroma signal (C_{OUT}) at preselected times, to generate sampled digital signals; and
adjustment control data generating means (11) coupled to said sampling means (12, 29, 43) and responsive to the sampled digital signals for generating at least one of said luminance and chroma adjustment control data and for supplying said adjustment control data to at least one of said luminance and chroma digital signal processing means to subject said input video signal to luminance and chroma adjustment operations, respectively.

2. Apparatus according to claim 1, wherein:
said input means (3, 4, 5) comprises an amplitude adjustment means (3), responsive to amplitude adjustment control data, for adjusting the amplitude of said input video signal;
said sampling means (29, 43) is operable to sample said adjusted digital luminance signal (Y_{OUT}) to generate a sampled digital luminance signal; and
said adjustment control data generating means (11) is responsive to the sampled digital luminance signal for generating amplitude adjustment control data and for supplying said amplitude adjustment control data to said amplitude adjustment means (3).

3. Apparatus according to claim 2, wherein said amplitude adjusting means (3) comprises an analogue automatic gain control (AGC) means (3), a register means (6) for storing said amplitude adjustment control data, and a digital to analogue converting means (7) coupled to said register means (6) for converting the stored amplitude adjustment control data to an analogue gain control signal and for supplying said analogue gain control signal to said analogue AGC means (3) for controlling the gain thereof.

4. Apparatus according to claim 1, wherein:
said input means (3, 4, 5) comprises a DC level adjusting means (4), responsive to level adjustment control data, for adjusting the DC level of said input video signal;
said sampling means (29, 43) is operable to sample said adjusted digital luminance signal (Y_{OUT}) to generate a sampled digital luminance signal; and
said adjustment control data generating means (11) is responsive to the sampled digital luminance signal for generating level adjustment control data and for supplying said level adjustment control data to said DC level adjusting means (4).

5. Apparatus according to claim 4, wherein said DC level adjusting means (4) comprises an analogue black level shift means (4), a register means (8) for storing said level adjustment control data, and a digital-to-analogue converting means (9) coupled to said register means (8) for converting the stored level adjustment control data to an analogue black level control signal and for supplying said analogue black level control signal to said analogue black level shift means (45).

6. Apparatus according to any one of the preceding claims, wherein said adjustment control data generating means (11) comprises a system controller (11) operable to cyclically control said sampling means (29, 43) to obtain cyclical samples of said at least one of said adjusted digital luminance signal and said adjusted digital chroma signal, and to generate said at least one of said luminance adjustment control data and said chroma adjustment control data cyclically until at least one of the adjusted digital luminance and chroma signals corresponds to a desired signal value.

7. Apparatus according to claim 6, wherein said adjustment control data generating means (11) comprises a memory means (10) for storing, for subsequent retrieval, the at least one of said luminance adjustment control data and said chroma adjustment control data generated by said system controller (11) when said at least one of said adjusted digital luminance signal and said adjusted digital chroma signal corresponds to said desired signal value.

8. Apparatus according to claim 1, wherein:
said luminance digital signal processing means (22) comprises a colour temperature correction means (26);
said sampling means (29, 43) is operable to sample the adjusted digital luminance signal (Y_{OUT}) to generate a sampled digital luminance signal; and
said adjustment control data generating means is operable to generate colour temperature control data in response to the sampled digital luminance data and to supply said colour temperature control data to said colour temperature correction means (26).

9. Apparatus according to claim 8, wherein:
said input video signal comprises pixel data derived from a charge coupled device (CCD) image pickup device;
said apparatus comprises a delay means (21) for delaying said pixel data to produce 0H, 1H and 2H delayed pixel data (where H is a unit delay substantially equal to a horizontal line period of said input video signal);
said colour temperature correction means (26) comprises a matrix means (30) for combining said 0H, 1H and 2H delayed pixel data in accordance with a controllable combining ratio; and
said colour temperature control data comprises matrix coefficient data for controlling the combining ratio with which said matrix means combines said 0H, 1H and 2H delayed pixel data.

10. Apparatus according to claim 1, wherein:
said chroma digital signal processing means (23) comprises a white balance adjustment means (37);
said sampling means (29, 43) is operable to sample the adjusted digital chroma signal (C_{OUT}) to generate a sampled digital chroma signal; and
said adjustment control data generating means (11) is operable to generate white balance control data in response to the sampled digital chroma signal and to supply said white balance control data to said white balance adjustment means (37).

11. Apparatus according to claim 10, wherein said input video signal represents a colour bar test chart scanned by a video camera, and said adjustment control data generating means (11) comprises a timing means (12) for providing timing signals to said sampling means (29, 43) at times corresponding to the scanning of a white portion of said colour bar test chart by said video camera.

12. Apparatus according to claim 11, wherein:
said input video signal comprises pixel data derived from a charge coupled device (CCD) image pickup device;
said apparatus comprises a delay means (21) for delaying said pixel data to produce 0H, 1H and 2H delayed pixel data (where H is a unit delay substantially equal to a horizontal line period of said input video signal);
said chroma digital signal processing means (23) comprises a chroma matrix means (36) for combining said 0H, 1H and 2H delayed pixel data to produce colour difference components, and a hue adjustment matrix means (39) for weighting said colour difference components with controllable weighting coefficients;
said timing means (12) provides further timing signals at times corresponding to the scanning by said video camera of colour portions of said colour bar test chart; and
said adjustment control data generating means (11) is operable to generate said weighting coefficients in response to the digital chroma data that is sampled by said sampling means in response to said further timing signals.

13. Apparatus according to claim 11 wherein:
said input video signal comprises digital colour components (R, G, B);
said white balance adjustment means (37) comprises a multiplier means for multiplying respective digital colour components by respective white balance weighting coefficients; and
said white balance control data generated by said adjustment control data generating means comprises said white balance weighting coefficients.

14. Apparatus according to claim 13, wherein:
said chroma digital signal processing means (23) comprises a combining means for combining the white-balanced-weighted digital colour components in a controllable combining ratio to determine hue;
said timing means (12) provides further timing signals at times corresponding to the scanning by said video camera of colour portions of said colour bar test chart; and
said adjustment control data generating means (11) is operable to generate combining ratio data for said combining means in response to the digital chroma data that is sampled by said sampling means (29, 43) in response to said further timing signals, and thereby to control the hue of said adjusted digital chroma signals.

15. Video signal processing apparatus for processing a video signal generated by video equipment comprising a video signal source (1, 2), said apparatus being self-contained with the video equipment and comprising:
amplitude adjusting means (3) responsive to amplitude adjustment control data for adjusting the amplitude of an input video signal;
DC level adjusting means (4) coupled to said amplitude adjusting means (3) and responsive to level adjustment control data for adjusting the DC level of said input video signal;
digital signal processing means (22) coupled to said DC level adjusting means (4) and arranged to be supplied with further adjustment control data, for subjecting the amplitude- and DC level-adjusted input video signal to further luminance adjustment operations to produce an adjusted digital video signal;
sampling means (29) for selectively sampling the adjusted digital video signal at preselected times to generate a sampled digital video signal; and
adjustment control data generating means (11) coupled to said sampling means (29) and responsive to the sampled digital video signal, for generating said amplitude, level and further adjustment control data and for supplying said amplitude adjustment control data to said amplitude adjustment means (3), said level adjustment control data to said DC level adjusting means (4), and said further adjustment control data to said digital signal processing means (22).

## Patentansprüche

1. Videosignal-Verarbeitungsvorrichtung zur Verarbeitung eines Videosignals, welches von einem Videogerät erzeugt ist, umfassend eine Videosignalquelle (1, 2),
wobei die betreffende Vorrichtung als selbständige Baugruppe mit bzw. in dem Videogerät vorgesehen ist und umfaßt:
eine Eingangseinrichtung (3, 4, 5) zur Bereitstellung eines zu verarbeitenden Eingangs-Videosignals,
eine digitale Luminanz-Signalverarbeitungseinrichtung (22), die so angeordnet ist, daß sie mit Luminanz-Einstellsteuerdaten versorgbar ist, um das genannte Eingangs-Videosignal bestimmten Luminanzeinstelloperationen zur Erzeugung von eingestellten digitalen Luminanzsignalen (Y_{OUT}) zu unterziehen, eine digitale Chroma-Signalverarbeitungseinrichtung (23), die so angeordnet ist, daß sie mit Chroma-Einstellsteuerdaten versorgbar ist, um das genannte Eingangs-Videosignal bestimmten Chroma-Einstelloperationen zur Erzeugung von eingestellten digitalen Chromasignalen (C_{OUT}) zu unterziehen,
eine Abtasteinrichtung (29, 43) zum selektiven Abtasten zumindest eines Signals des eingestellten digitalen Luminanzsignals (Y_{OUT}) und des eingestellten digitalen Chromasignals (C_{OUT}) zu vorgewählten Zeitpunkten zur Erzeugung von abgetasteten digitalen Signalen,
und eine Einstellsteuerdaten-Erzeugungseinrichtung (11), die mit der genannten Abtasteinrichtung (12,29,43) verbunden ist und die auf die abgetasteten digitalen Signale hin zumindest eines der genannten Luminanz- und Chrominanz-Einstellsteuerdaten erzeugt und die genannten Einstellsteuerdaten an zumindest eine der genannten digitalen Luminanz- und Chroma-Signalverarbeitungseinrichtungen abgibt, um das genannte Eingangs-Videosignal den Luminanz- bzw. Chroma-Einstelloperationen zu unterziehen.

2. Vorrichtung nach Anspruch 1, wobei die genannte Eingangseinrichtung (3, 4, 5) eine Amplitudeneinstelleinrichtung (3) umfaßt, die auf Amplituden-Einstellsteuerdaten hin die Amplitude des genannten Eingangs-Videosignals einstellt,
wobei die genannte Abtasteinrichtung (29, 43) derart betreibbar ist, daß das genannte eingestellte digitale Luminanzsignal (Y_{OUT}) zur Erzeugung eines abgetasteten digitalen Luminanzsignals abgetastet wird,
und wobei die genannte Einstellsteuerdaten-Erzeugungseinrichtung (11) auf das abgetastete digitale Luminanzsignal hin Amplituden-Einstellsteuerdaten erzeugt und die genannten Amplituden-Einstellsteuerdaten an die genannte Amplituden-Einstelleinrichtung (3) abgibt.

3. Vorrichtung nach Anspruch 2, wobei die genannte Amplituden-Einstelleinrichtung (3) eine analoge automatische Verstärkungssteuereinrichtung (AGC) (3), eine Registereinrichtung (6) zur Speicherung der genannten Amplituden-Einstellsteuerdaten und eine Digital-Analog-Umsetzeinrichtung (7) umfaßt, die mit der genannten Registereinrichtung (6) verbunden ist zur Umsetzung der gespeicherten Amplituden-Einstellsteuerdaten in ein analoges Verstärkungssteuersignal und zur Abgabe des genannten analogen Verstärkungssteuersignals an die genannte analoge automatische Verstärkungssteuereinrichtung (3) zur Steuerung von deren Verstärkung.

4. Vorrichtung nach Anspruch 1, wobei die genannte Eingangseinrichtung (3, 4, 5) eine Gleichspannungspegel-Einstelleinrichtung (4) umfaßt, die auf Pegel-Einstellsteuerdaten hin den Gleichspannungspegel des genannten Eingangs-Videosignals einstellt,
wobei die genannte Abtasteinrichtung (29, 43) derart betreibbar ist, daß das genannte eingestellte digitale Luminanzsignal (Y_{OUT}) zur Erzeugung eines abgetasteten digitalen Luminanzsignals abgetastet wird,
und wobei die genannte Einstellsteuerdaten-Erzeugungseinrichtung (11) auf das abgetastete digitale Luminanzsignal hin Pegel-Einstellsteuerdaten erzeugt und die genannten Pegel-Einstellsteuerdaten an die Gleichspannungspegel-Einstelleinrichtung (4) abgibt.

5. Vorrichtung nach Anspruch 4, wobei die genannte Gleichspannungspegel-Einstelleinrichtung (4) eine analoge Schwarzwert-Verschiebeeinrichtung (4), eine Registereinrichtung (8) zur Speicherung der genannten Pegel-Einstellsteuerdaten und eine Digital-Analog-Umsetzeinrichtung (9) umfaßt, die mit der genannten Registereinrichtung (8) zur Umsetzung der gespeicherten Pegel-Einstellsteuerdaten in ein analoges Schwarzwert-Steuersignal und zur Abgabe des genannten analogen Schwarzwert-Steuersignals an die genannte analoge Schwarzwert-Verschiebeeinrichtung (45) verbunden ist.

6. Vorrichtung nach irgendeinem der vorhergehenden Ansprüche,
wobei die genannte Einstellsteuerdaten-Erzeugungseinrichtung (11) eine Systemsteuereinrichtung (11) umfaßt, die derart betreibbar ist, daß die genannte Abtasteinrichtung (29, 43) zur Erzielung von zyklischen Abtastproben des genannten zumindest einen Signals des eingestellten digitalen Luminanzsignals und des eingestellten digitalen Chromasignals zyklisch gesteuert wird,
und daß die genannten zumindest einen Daten der Luminanz-Einstellsteuerdaten und der Chroma-Einstellsteuerdaten solange zyklisch erzeugt werden, bis zumindest eines der eingestellten digitalen Luminanz- und Chromasignale einem gewünschten Signalwert entspricht.

7. Vorrichtung nach Anspruch 6, wobei die genannte Einstellsteuerdaten-Erzeugungseinrichtung (11) eine Speichereinrichtung (10) umfaßt zur Speicherung für ein anschließendes Wiederauffinden der zumindest einen Daten der genannten Luminanz-Einstellsteuerdaten und der genannten Chroma-Einstellsteuerdaten, die durch die genannte Systemsteuereinrichtung (11) erzeugt sind, in dem Fall, daß das zumindest eine Signal des genannten eingestellten Luminanzsignals und des genannten eingestellten digitalen Chromasignals dem genannten gewünschten Signalwert entspricht.

8. Vorrichtung nach Anspruch 1, wobei die genannte digitale Luminanz-Signalverarbeitungseinrichtung (22) eine Farbtemperatur-Korrektureinrichtung (26) umfaßt;
wobei die genannte Abtasteinrichtung (29, 43) derart betreibbar ist, daß das eingestellte digitale Luminanzsignals (Y_{OUT}) zur Erzeugung eines abgetasteten digitalen Luminanzsignals abgetastet wird;
und wobei die genannte Einstellsteuerdaten-Erzeugungseinrichtung derart betreibbar ist, daß auf die abgetasteten digitalen Luminanzdaten hin Farbtemperatur-Steuerdaten erzeugt und an die Farbtemperatur-Korrektureinrichtung (26) abgegeben werden.

9. Vorrichtung nach Anspruch 8, wobei das genannte Eingangs-Videosignal Pixeldaten umfaßt, die von einer ladungsgekoppelten Bildaufnahmeeinrichtung (CCD) abgeleitet sind,
wobei die genannte Vorrichtung eine Verzögerungseinrichtung (21) umfaßt für die Erzeugung der genannten Pixeldaten zur Erzeugung von 0H-, 1H- und 2H-verzögerten Pixeldaten, (wobei H eine Einheits-Verzögerung ist, die im wesentlichen gleich einer Horizontal-Zeilenperiode des genannten Eingangs-Videosignals ist),
wobei die genannte Farbtemperatur-Korrektureinrichtung (26) eine Matrixeinrichtung (30) umfaßt zum Kombinieren der genannten 0H-, 1H- und 2H-verzögerten Pixeldaten in Übereinstimmung mit einem steuerbaren Kombinationsverhältnis,
und wobei die genannten Farbtemperatur-Steuerdaten Matrix-Koeffizientendaten zur Steuerung des Kombinationsverhältnisses umfaßt, mit welchen die genannte Matrixeinrichtung die genannten 0H-, 1H- und 2H-verzögerten Pixeldaten kombiniert.

10. Vorrichtung nach Anspruch 1, wobei die genannte digitale Chroma-Signalverarbeitungseinrichtung (23) eine Weißabgleich-Einstelleinrichtung (37) umfaßt,
wobei die genannte Abtasteinrichtung (29, 43) derart betreibbar ist, daß das eingestellte digitale Chromasignal (C_{OUT}) zur Erzeugung eines abgetasteten digitalen Chromasignals abgetastet wird,
und wobei die genannte Einstellsteuerdaten-Erzeugungseinrichtung (11) derart betreibbar ist, daß auf das abgetastete digitale Chromasignal hin Weißabgleich-Steuerdaten erzeugt und an die Weißabgleich-Einstelleinrichtung (37) abgegeben werden.

11. Vorrichtung nach Anspruch 10, wobei das genannte Eingangs-Videosignal ein durch eine Videokamera abgetastetes Farbbalken-Testbild repräsentiert
und wobei die genannte Einstellsteuerdaten-Erzeugungseinrichtung (11) eine Zeitsteuereinrichtung (12) umfaßt zur Bereitstellung von Zeitsteuersignalen für die genannte Abtasteinrichtung (29, 43) zu Zeitpunkten, die der Abtastung eines Weißbereichs des genannten Farbbalken-Testbildes durch die genannte Videokamera entsprechen.

12. Vorrichtung nach Anspruch 11, wobei das genannte Eingangs-Videosignal Pixeldaten umfaßt, die von einer ladungsgekoppelten Bildaufnahmeeinrichtung (CCD) abgeleitet sind, wobei die genannte Vorrichtung eine Verzögerungseinrichtung (21) umfaßt zur Verzögerung der genannten Pixeldaten für die Erzeugung von 0H-, 1H- und 2H-verzögerten Pixeldaten (wobei H eine Einheits-Verzögerung ist, die im wesentlichen gleich einer Horizontal-Zeilenperiode des genannten Eingangs-Videosignals ist),
wobei die genannte digitale Chroma-Signalverarbeitungseinrichtung (23) eine Chroma-Matrixeinrichtung (36) zum Kombinieren der genannten 0H-, 1H- und 2H-verzögerten Pixeldaten zur Erzeugung von Farbdifferenzkomponenten und eine Farbwert-Einstellmatrixeinrichtung (39) zur Gewichtung der genannten Farbdifferenzkomponenten mit steuerbaren Gewichtungskoeffizienten umfaßt,
wobei die genannte Zeitsteuereinrichtung (12) weitere Zeitsteuersignale zu Zeitpunkten bereitstellt, die der Abtastung von Farbbereichen des genannten Farbbalken-Testbildes durch die genannte Videokamera entsprechen,
und wobei die genannte Einstellsteuerdaten-Erzeugungseinrichtung (11) derart betreibbar ist, daß die genannten Gewichtungskoeffizienten auf die digitalen Chromasignale hin erzeugt werden, welche durch die genannte Abtasteinrichtung auf die genannten weiteren Zeitsteuersignale hin abgetastet werden bzw. sind.

13. Vorrichtung nach Anspruch 11, wobei das genannte Eingangs-Videosignal digitale Farbkomponenten (R, G, B) umfaßt,
wobei die genannte Weißabgleich-Einstelleinrichtung (37) eine Multipliziereinrichtung umfaßt zum Multiplizieren entsprechender digitaler Farbkomponenten mit entsprechenden Weißabgleich-Gewichtungskoeffizienten
und wobei die durch die genannte Einstellsteuerdaten-Erzeugungseinrichtung erzeugten Weißabgleich-Steuerdaten die genannten Weißabgleich-Gewichtungskoeffizienten umfassen.

14. Vorrichtung nach Anspruch 13, wobei die genannte digitale Chroma-Signalverarbeitungseinrichtung (23) eine Kombinationseinrichtung umfaßt zum Kombinieren der hinsichtlich des Weißabgleichs gewichteten digitalen Farbkomponenten in einem steuerbaren Kombinationsverhältnis zur Farbwertbestimmung,
wobei die genannte Zeitsteuereinrichtung (12) ferner Zeitsteuersignale zu Zeitpunkten bereitstellt, die der Abtastung von Farbbereichen des genannten Farbbalken-Testbildes durch die genannte Videokamera entsprechen,
und wobei die genannte Einstellsteuerdaten-Erzeugungseinrichtung (11) derart betreibbar ist, daß Kombinationsverhältnis-Daten für die genannte Kombinationseinrichtung auf die digitalen Chromadaten hin erzeugt werden, die durch die genannte Abtasteinrichtung (29, 43) auf die genannten weiteren Zeitsteuersignale hin abgetastet werden, und daß dadurch der Farbwert der genannten eingestellten digitalen Chromasignale gesteuert wird.

15. Videosignal-Verarbeitungsvorrichtung zur Verarbeitung eines Videosignals, welches durch ein Videogerät erzeugt ist, das eine Videosignalquelle (1,2) umfaßt, wobei die betreffende Vorrichtung als selbständige Baugruppe mit bzw. in dem Videogerät vorgesehen ist und umfaßt:
eine Amplituden-Einstelleinrichtung (3), die auf Amplituden-Einstellsteuerdaten hin die Amplitude eines Eingangs-Videosignals einstellt,
eine Gleichspannungspegel-Einstelleinrichtung (4), die mit der genannten Amplituden-Einstelleinrichtung (3) verbunden ist und die auf die Pegel-Einstellsteuerdaten hin den Gleichspannungspegel des genannten Eingangs-Videosignals einstellt,
eine digitale Signal-Verarbeitungseinrichtung (22), die mit der genannten Gleichspannungspegel-Einstelleinrichtung (4) verbunden ist und die so angeordnet bzw. ausgelegt ist, daß sie mit weiteren Einstellsteuerdaten versorgt wird, um das hinsichtlich der Amplitude und des Gleichspannungspegels eingestellte Eingangs-Videosignal weiteren Luminanz-Einstelloperationen zur Erzeugung eines eingestellten digitalen Videosignals zu unterziehen,
eine Abtasteinrichtung (29) zum selektiven Abtasten des eingestellten digitalen Videosignals zu vorausgewählten Zeitpunkten für die Erzeugung eines abgetasteten digitalen Videosignals
und eine Einstellsteuerdaten-Erzeugungseinrichtung (11), die mit der genannten Abtasteinrichtung (29) verbunden ist und die auf das abgetastete digitale Videosignal hin die genannten Amplituden-, Pegel- und weiteren Einstellsteuerdaten erzeugt und die genannten Amplituden-Einstellsteuerdaten an die genannte Amplituden-Einstelleinrichtung (3), die genannten Pegel-Einstellsteuerdaten an die genannte Gleichspannungspegel-Einstelleinrichtung (4)und die genannten weiteren Einstellsteuerdaten an die genannte digitale Signalverarbeitungseinrichtung (22) abgibt.

## Revendications

1. Dispositif de traitement de signal vidéo pour traiter un signal vidéo produit par un équipement vidéo comprenant une source de signal vidéo (1, 2), ledit dispositif étant intégré à l'équipement vidéo et comprenant :
un moyen d'entrée (3, 4, 5) pour délivrer un signal vidéo d'entrée à traiter ;
un moyen de traitement de signal numérique de luminance (22) conçu pour être alimenté avec une donnée de commande de réglage pour soumettre ledit signal vidéo d'entrée à des opérations prédéterminées de réglage de luminance pour produire un signal numérique de luminance réglée (Y_{OUT});
un moyen de traitement de signal numérique de chrominance (23) conçu pour être alimenté avec une donnée de commande de réglage de chrominance pour soumettre ledit signal vidéo d'entrée à des opérations prédéterminées de réglage de chrominance pour produire un signal numérique de chrominance réglée (C_{OUT});
un moyen d'échantillonnage (29, 43) pour échantillonner de manière sélective, à des instants prédéterminés, au moins l'un dudit signal numérique de luminance réglée (Y_{OUT}) et dudit signal numérique de chrominance réglée (C_{OUT}), pour produire des signaux numériques échantillonnés ; et
un moyen générateur de données de commande de réglage (11) connecté audit moyen d'échantillonnage (12, 29, 43) et sensible auxdits signaux numériques échantillonnés pour produire au moins l'une de ladite donnée de commande de réglage de luminance ou de chrominance et pour délivrer ladite donnée de commande de réglage à au moins l'un desdits moyens de traitement de signal numérique de luminance et de chrominance pour soumettre ledit signal vidéo d'entrée, respectivement, à des opérations de réglage de luminance et de chrominance.

2. Dispositif selon la revendication 1, dans lequel :
ledit moyen d'entrée (3, 4, 5) comprend un moyen de réglage d'amplitude (3), sensible à une donnée de commande de réglage d'amplitude, pour régler l'amplitude dudit signal d'amplitude d'entrée ;
ledit moyen d'échantillonnage (29, 43) sert à échantillonner ledit signal numérique de luminance réglée (YOUT) pour engendrer un signal numérique de luminance échantillonnée ; et
ledit moyen générateur de données de commande de réglage (11) est sensible au signal numérique de luminance échantillonnée pour engendrer la donnée de commande de réglage d'amplitude et pour délivrer ladite donnée de commande de réglage d'amplitude audit moyen de réglage d'amplitude (3).

3. Dispositif selon la revendication 2, dans lequel ledit moyen de réglage d'amplitude (3) comprend un moyen de commande automatique de gain (AGC) analogique (3), un moyen formant registre (6) pour mémoriser ladite donnée de commande de réglage d'amplitude, et un moyen de conversion de numérique en analogique (7) raccordé audit moyen formant registre (6) pour convertir la donnée de commande de réglage d'amplitude mémorisée en un signal de commande de gain analogique et pour délivrer ledit signal de commande de gain analogique audit moyen d'AGC analogique (3) pour en commander le gain.

4. Dispositif selon la revendication 1, dans lequel :
ledit moyen d'entrée (3, 4, 5) comprend un moyen de réglage de niveau de courant continu (4), sensible à une donnée de commande de réglage de niveau, pour régler le niveau de courant continu dudit signal vidéo d'entrée ;
ledit moyen d'échantillonnage (29, 43) sert à échantillonner ledit signal numérique de luminance réglée (Y_{OUT}) pour engendrer un signal numérique de luminance échantillonnée ; et
ledit moyen générateur de données de commande de réglage (11) est sensible au signal numérique de luminance échantillonnée pour engendrer la donnée de commande de réglage de niveau et pour délivrer ladite donnée de commande de réglage de niveau audit moyen de réglage de niveau de courant continu (4).

5. Dispositif selon la revendication 4, dans lequel ledit moyen de réglage de niveau de courant continu (4) comprend un moyen de décalage analogique de niveau de noir (4), un moyen formant registre (8) pour mémoriser ladite donnée de commande de réglage de niveau, et un moyen de conversion de numérique en analogique (9) raccordé audit moyen formant registre (8) pour convertir la donnée de commande de réglage de niveau mémorisée en un signal analogique de commande de niveau de noir et pour délivrer ledit signal analogique de commande de niveau de noir audit moyen analogique de décalage de niveau de noir (45).

6. Dispositif selon l'une quelconque des revendications précédentes, dans lequel ledit moyen générateur de données de commande de réglage (11) comprend un régisseur de système (11) servant à commander de manière cyclique ledit moyen d'échantillonnage (29, 43) pour obtenir des échantillons cycliques d'au moins l'un dudit signal numérique de luminance réglée et dudit signal numérique de chrominance réglée, et pour engendrer, de façon cyclique, au moins l'une de ladite donnée de commande de réglage de luminance et de ladite donnée de commande de réglage de chrominance, jusqu'à ce qu'au moins l'un des signaux numériques de luminance et de chrominance réglées corresponde à une valeur de signal voulue.

7. Dispositif selon la revendication 6, dans lequel ledit moyen générateur de données de commande de réglage (11) comprend un moyen de mémorisation (10) pour mémoriser, pour récupération ultérieure, ladite au moins une de ladite donnée de commande de réglage de luminance et de ladite donnée de commande de réglage de chrominance engendrées par ledit régisseur de système (11) lorsque ledit au moins un dudit signal numérique de luminance réglée et dudit signal numérique de chrominance réglée correspond à ladite valeur de signal voulue.

8. Dispositif selon la revendication 1, dans lequel :
ledit moyen de traitement de signal numérique de luminance (22) comprend un moyen de correction de température de couleur (26) ;
ledit moyen d'échantillonnage (29, 43) sert à échantillonner le signal numérique de luminance réglée (Y_{OUT}) pour engendrer un signal numérique de luminance échantillonnée ; et
ledit moyen générateur de données de commande de réglage sert à engendrer la donnée de commande de température de couleur en réponse à la donnée numérique de luminance échantillonnée et à délivrer ladite donnée de commande de température de couleur audit moyen de correction de température de couleur (26).

9. Dispositif selon la revendication 8, dans lequel :
ledit signal vidéo d'entrée comprend des données de pixel obtenues d'un dispositif analyseur d'image à dispositif à couplage de charges (CCD) ;
ledit dispositif comprend un moyen de retardement (21) pour retarder lesdites données de pixel pour produire des données de pixel retardées de 0 H, 1 H et 2 H (où H est un retard unité sensiblement égal à une période de balayage horizontal dudit signal vidéo d'entrée) ;
ledit moyen de correction de température de couleur (26) comprend un moyen matriciel (30) pour combiner lesdites données de pixels retardées de 0 H, 1 H et 2 H en fonction d'un rapport de combinaison pouvant être commandé ; et
ladite donnée de commande de température de couleur comprend une donnée de coefficient matriciel pour commander le rapport de combinaison suivant lequel ledit moyen matriciel combine lesdites données de pixel retardées de 0 H, 1 H et 2 H.

10. Dispositif selon la revendication 1, dans lequel :
ledit moyen processeur de signal numérique de chrominance (23) comprend un moyen de réglage d'équilibrage des blancs (37) ;
ledit moyen d'échantillonnage (29, 43), sert à échantillonner le signal numérique de chrominance réglée (COUT) pour produire un signal numérique de chrominance échantillonnée ; et
ledit moyen générateur de données de commande de réglage (11) sert à engendrer une donnée de commande d'équilibrage des blancs en réponse au signal numérique de chrominance échantillonnée et à appliquer ladite donnée de commande d'équilibrage des blancs audit moyen de réglage d'équilibrage des blancs (37).

11. Dispositif selon la revendication 10, dans lequel ledit signal vidéo d'entrée représente une carte de contrôle à barres de couleur balayée par une caméra vidéo, et ledit moyen générateur de données de commande de réglage (11) comprend un moyen de cadencement (12) pour délivrer des signaux de cadencement audit moyen d'échantillonnage (29, 43) à des instants correspondant au balayage, par ladite caméra vidéo, de la partie blanche de ladite carte de contrôle à barres de couleur.

12. Dispositif selon la revendication 11 dans lequel :
ledit signal vidéo d'entrée comprend des données de pixel obtenues d'un dispositif analyseur d'image à dispositif à couplage de charges (CCD) ;
ledit dispositif comprend un moyen de retardement (21) pour retarder lesdites données de pixel pour produire des données de pixel retardées de 0 H, 1 H et 2 H (où H est un retard unité sensiblement égal à une période de balayage horizontal dudit signal vidéo d'entrée) ;
ledit moyen processeur de signal numérique de chrominance (23) comprend un moyen matriciel de chrominance (36) pour combiner lesdites données de pixel retardées de 0 H, 1 H et 2 H pour produire des composantes de différence de couleur, et un moyen matriciel de réglage de teinte (39) pour pondérer lesdites composantes de différence de couleur à l'aide de coefficients de pondération pouvant être commandés ;
ledit moyen de cadencement (12) délivre des signaux de cadencement supplémentaires à des instants correspondant au balayage, par ladite caméra vidéo, de parties colorées de ladite carte de contrôle à barres de couleur ; et
ledit moyen générateur de données de commande de réglage (11) sert à engendrer lesdits coefficients de pondération en réponse à la donnée numérique de chrominance qui est échantillonnée par ledit moyen d'échantillonnage en réponse auxdits signaux de cadencement supplémentaires.

13. Dispositif selon la revendication 11, dans lequel :
ledit signal vidéo d'entrée comprend des composantes de couleur (R, G, B) ;
ledit moyen de réglage d'équilibrage des blancs (37) comprend un moyen multiplicateur pour multiplier les composantes numériques de couleur respectives par des coefficients respectifs de pondération d'équilibrage des blancs ; et
ladite donnée de commande de d'équilibrage des blancs engendrée par ledit moyen générateur de données de commande de réglage comprend lesdits coefficients de pondération d'équilibrage des blancs.

14. Dispositif selon la revendication 13, dans lequel :
ledit moyen de traitement de signal numérique de chrominance (23) comprend un moyen de combinaison pour combiner les composantes numériques de couleur pondérées, équilibrées en ce qui concerne les blancs, dans un rapport de combinaison pouvant être commandé, pour déterminer la teinte ;
ledit moyen de cadencement (12) délivre des signaux de cadencement supplémentaires à des instants correspondant au balayage, par ladite caméra vidéo, de parties colorées de ladite carte de contrôle à barres de couleur ; et
ledit moyen générateur de données de commande de réglage (11) sert à engendrer une donnée de rapport de combinaison pour ledit moyen de combinaison en réponse à la donnée numérique de chrominance qui est échantillonnée par ledit moyen d'échantillonnage (29, 43) en réponse auxdits signaux de cadencement supplémentaires, et pour commander ainsi la teinte desdits signaux numériques de chrominance réglée.

15. Dispositif de traitement de signal vidéo pour traiter un signal vidéo produit par un équipement vidéo comprenant une source de signal vidéo (1, 2), ledit dispositif étant intégré à l'équipement vidéo et comprenant :
un moyen de réglage d'amplitude (3) sensible à une donnée de commande de réglage d'amplitude pour régler l'amplitude d'un signal vidéo d'entrée ;
un moyen de réglage de niveau de courant continu (4) lié audit moyen de réglage d'amplitude (3) et sensible à une donnée de commande de réglage de niveau pour régler le niveau de courant continu dudit signal vidéo d'entrée ;
un moyen de traitement de signal numérique (22) lié audit moyen de réglage de niveau de courant continu (4) et agencé pour être alimenté avec une donnée de commande de réglage supplémentaire, pour soumettre le signal vidéo d'entrée réglé en amplitude et en niveau de courant continu à des opérations supplémentaires de réglage de luminance pour produire un signal vidéo numérique réglé ;
un moyen d'échantillonnage (29) pour échantillonner de manière sélective le signal vidéo numérique réglé à des instants prédéterminés pour engendrer un signal vidéo numérique échantillonné ; et
un moyen générateur de données de commande de réglage (11) lié audit moyen d'échantillonnage (29) et sensible audit signal vidéo numérique échantillonné, pour engendrer lesdites données de commande de réglage d'amplitude, de niveau et supplémentaire, et pour délivrer ladite donnée de commande de réglage d'amplitude audit moyen de réglage d'amplitude (3), ladite donnée de commande de réglage de niveau audit moyen de réglage de niveau de courant continu (4) et ladite donnée de commande de réglage supplémentaire audit moyen de traitement de signal numérique (22).
